# EUROPÄISCHE PATENTSCHRIFT

(11) **EP 0 802 225 B1**
(45) Veröffentlichungstag und Bekanntmachung des Hinweises auf die Patenterteilung: **19.06.2002**
(21) Anmeldenummer: 97102846.9
(22) Anmeldetag: 21.02.1997
(51) Int. Cl.: C08L 67/02, C08L 69/00, C08K 5/29, C08K 5/353

(54) **Formmasse**
Moulding compositions
Compositions à mouler

(30) Priorität: 16.04.1996 DE 19614871
(43) Veröffentlichungstag der Anmeldung: 22.10.1997
(73) Patentinhaber: Degussa AG, 40474 Düsseldorf (DE)
(72) Erfinder: Detlef, Argast, 44894 Bochum (DE); Heinz, Peirick, 48653 Coesfeld (DE); Schüler, Ralf, Dr., 45659 Recklinghausen (DE)

(56) Entgegenhaltungen:
- EP-A- 0 598 213
- DE-A- 2 419 968
- DE-A- 3 150 957
- PATENT ABSTRACTS OF JAPAN vol. 013, no. 179 (C-590), 26.April 1989 & JP 01 006054 A (MITSUBISHI GAS CHEM CO INC), 10.Januar 1989,

## Beschreibung

Gegenstand der Erfindung ist eine Formmasse auf Basis von linearen thermoplastischen Polyestern und Polycarbonaten.

Polyester sind bekannte und bewährte Konstruktionswerkstoffe, die z. B. nach dem Spritzguß- oder Extrusionsverfahren verarbeitet werden können. So hergestellte Formteile weisen jedoch häufig eine unerwünscht hohe Schwindung auf, so daß in vielen Fällen Polyester als Konstruktionswerkstoffe ungeeignet sind. Um diese bekannten Nachteile des Polyesters zu vermeiden, werden Mischungen aus Polyester und Polycarbonat eingesetzt (siehe z. B. AU 55998/65, WO-A 80/972, DE-OS 26 22 414, BE 827 693 und US 3 218 372). Im Vergleich zu Formmassen aus Polyestern weisen diese Polyester/Polycarbonat-Mischungen jedoch eine verminderte Beständigkeit gegen Wasserdampf, Wärme und Chemikalien auf.

Es ist bekannt, daß Polyesterformmassen Bisoxazoline enthalten können (DE-OS 31 50 957). Durch den Zusatz des Bisoxazolins erzielt man eine gewisse Kettenverlängerung, wodurch der thermische Abbau bei der Verarbeitung kompensiert werden kann. Darüber hinaus erhält man auch eine gewisse Verbesserung der Hydrolysebeständigkeit, die aber für viele Anwendungszwecke, beispielsweise für Lichtwellenleiter oder Aderisolierungen, noch nicht ausreicht.

Aufgabe der Erfindung war es, Polyester/Polycarbonat-Mischungen zur Verfügung zu stellen, welche die geschilderten Nachteile des Standes der Technik nicht aufweisen.

Die Aufgabe wurde durch eine Formmasse gelöst, die folgende Komponenten enthält:
A. 41 bis 99 Gew.-% eines linearen thermoplastischen Polyesters,
B. 1 bis 59 Gew.-% eines Polycarbonats,
wobei die Formmasse zusätzlich
C. 0,02 bis 5 Gew.-% - bezogen auf die Summe der Komponenten (A. + B.) - eines Isocyanats sowie
D. 0,02 bis 2 Gew.-% - bezogen auf die Summe der Komponenten (A. + B.) - einer Verbindung der allgemeinen Formel (I) 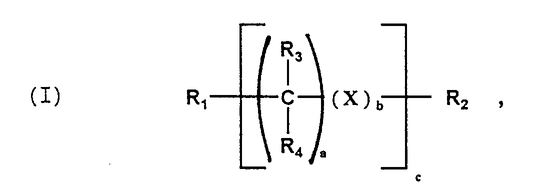
enthält, in der
- R₁ und R₂:: 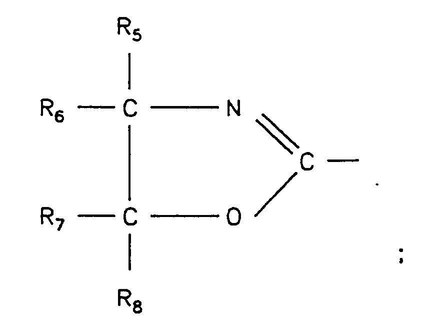
- R₃ bis R₈:: H; aliphatischer oder cycloaliphatischer C₁₋₁₂-Rest,
wobei R₃ bis R₈ gleich oder verschieden sein können;
- X:: aromatischer C₆₋₁₂-Rest, cycloaliphatischer C₃₋₁₂-Rest
- a:: 0 bis 12;
- b:: 0; 1
- c:: 0; 1
bedeuten und die Summe der Komponenten (C. + D.) mindestens 0,04 Gew.-%, bevorzugt mindestens 0,2 Gew.-% und besonders bevorzugt mindestens 1,0 Gew.-% beträgt.

Die Gew.-%-Angaben beziehen sich hierbei in allen Fällen auf die Summe der Komponenten A und B.

Die linearen Polyester (Komponente A.) weisen nachstehende Grundstruktur auf 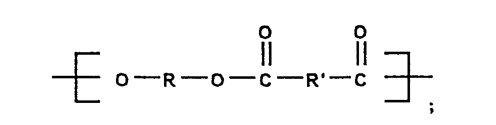 dabei stellt R einen divalenten, verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel 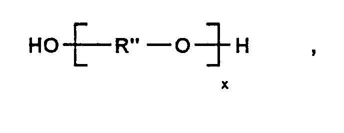 wobei R" einen zweiwertigen Rest mit 2 bis 4 C-Atomen bedeutet und x einen Wert von 2 bis 50 annehmen kann, ersetzt sein.

Bevorzugt als Diole werden Ethylenglykol und insbesondere Tetramethylenglykol eingesetzt.

Als aromatische Dicarbonsäuren kommen z. B. Terephthalsäure, Isophthalsäure, 1.4-, 1.5-, 2.6- bzw. 2.7-Naphthalindicarbonsäure, Diphensäure, Diphenylether-4,4'dicarbonsäure in Frage. Terephthalsäure ist bevorzugt.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik [DE-OSS 24 07 155, 24 07 156; **Ullmanns Encyclopädie der technischen Chemie,** 4. Aufl., Bd. 19, Seite 65 ff. - Verlag Chemie GmbH, Weinheim, 1980; Sorensen and Campbell - **Preparative Methods of Polymer Chemistry,** Interscience Publ., New York (1961), S. 111 ff].

Die erfindungsgemäß eingesetzten Polyester weisen eine Viskositätszahl (J-Wert) im Bereich von 80 bis 240 cm³/g auf.

Die Polyester der Komponente A. können bis zu 40 Gew.-% andere Thermoplaste enthalten, sofern diese die erfindungsgemäßen Eigenschaften nicht stören. Insbesondere seien hier Acrylnitril/Styrol/Butadien- (Houben-Weyl, **Methoden der organischen Chemie,** Bd. 14/1, Georg Thieme Verlag Stuttgart, S. 393- 406; **Ullmanns Encyclopädie der technischen Chemie,** 4. Auflage, Bd. 19, Verlag Chemie Weinheim (1981), S. 279- 284), Acrylnitril/Styrol/Acrylat- (**Ullmanns Encyclopädie der technischen Chemie,** 4. Auflage, Bd. 19, Verlag Chemie Weinheim (1981), S. 277- 295), Acrylnitril/Styrol-Copolymerisate (**Ullmanns Encyclopädie der technischen Chemie**, 4. Auflage, Bd. 19, Verlag Chemie Weinheim (1981), S. 273 ff.) oder Polyphenylenether (DE-OSS 32 24 691, 32 24 692; US-PSS 3 306 874, 3 306 875, 4 028 341) genannt.

Sofern erforderlich, können die Polyester schlagzäh eingestellt werden. Geeignete Modifier sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685).

Die Polycarbonate der Komponente B. können sowohl Homo- als auch Copolycarbonate sein. Bevorzugt eingesetzt werden solche Polycarbonate, die Diphenole, Di(hydroxyphenyl)-alkane und/oder Di(hydroxyphenyl)-ether zur Basis haben. Im einzelnen seien als Ausgangskomponenten beispielhaft 2.2-Bis(4-hydroxyphenyl)propan, Bis(4-hydroxyphenyl)methan, 4.4'-Dihydroxydiphenylether, 4.4'-Dihydroxydiphenylsulfid, 4.4'-Dihydroxydiphenylsulfon, 4.4'-Dihydroxy-3.3'.5.5'-tetramethyldiphenylsulfon, 4.4'-Dihydroxybenzophenon, 4.4'-Dihydroxybiphenyl, Hydrochinon, 1.4-Dihydroxynaphthalin, 1.5-Dihydroxynaphthalin und 2.6-Dihydroxynaphthalin genannt. Bevorzugt werden Polycarbonate auf der Basis von 2.2-Bis(4-hydroxyphenyl)propan (Bisphenol A) eingesetzt.

Die Polycarbonate an sich sowie ihre Herstellung sind bekannt [H. Schnell, **Chemistry and Physics of Polycarbonates,** Interscience Publ., New York (1981)].

Die erfindungsgemäß eingesetzten Polycarbonate weisen eine Lösungsviskosität (Viskositätszahl J) von 20 bis 100 cm³/g auf.

Die Formmasse enthält 41 bis 99 Gew.-%, vorzugsweise 60 bis 80 Gew.-%, linearen Polyester und 1 bis 59 Gew.-%, vorzugsweise 20 bis 40 Gew.-% Polycarbonat.

Als Komponente C. können Verbindungen eingesetzt werden, die eine oder mehrere Isocyanatgruppen tragen. Als solche eignen sich insbesondere aromatische und (cyclo-)aliphatische Isocyanate wie beispielsweise 1.4-Phenylendiisocyanat, 2.4-Toluylendiisocyanat, 2.6-Toluylendiisocyanat, 1.5-Naphthylendiisocyanat, 1.6-Hexamethylendiisocyanat, Diphenylmethan-2.4-diisocyanat, Diphenylmethan-4.4'diisocyanat, Diphenylmethan-2.2'-diisocyanat, Isophorondiisocyanat, 1.4-Tetramethylendiisocyanat, 1.12-Dodecandiisocyanat. Weitere Beispiele sind Cyclohexan-1,3-diisocyanat, Cyclohexan-1,4-diisocyanat, Cyclobutan-1,3-diisocyanat, 2.4-Hexahydrotoluylendiisocyanat, 2.6-Hexahydrotoluylendiisocyanat, Hexahydro-1.3-phenylendiisocyanat, Hexahydro-1.4-phenylendiisocyanat, Norbornandiisocyanat, p- oder m-Xylylendüsocyanate, Perhydro-2.4-diphenylmethandiisocyanat und Perhydro-4.4'-diphenylmethandiisocyanat.

Als Komponente C. haben sich besonders vorteilhaft Isophorondiisocyanat sowie Umsetzungsprodukte davon mit sich selbst sowie mit geeigneten Reaktanden, wie z. B. α,ω-Diolen mit 2 bis 10 C-Atomen in der Kohlenstoffkette erwiesen.

Bevorzugte Umsetzungsprodukte ergeben sich beispielsweise aus der Reaktion mindestens zweier Moleküle Isophorondiisocyanat, wobei die Bindung durch Reaktion von jeweils zwei Isocyanatgruppen unter Ausbildung einer Biuretgruppe erfolgt.

Weitere vorteilhafte Umsetzungsprodukte werden beispielsweise durch Umsetzung von jeweils zwei Isophorondiisocyanat-Molekülen mit einem Molekül Diol erhalten, wobei jeweils eine Isocyanatgruppe des Isophorondiisocyanats mit einer der Hydroxylgruppen des Diols eine Urethanbindung ausbildet. Beispiele für besonders gut geeignete Diole sind Butandiol und Diethylenglykol.

Gleichfalls als Komponente C. können Verbindungen eingesetzt werden, die mehr als zwei Isocyanatgruppen enthalten. Als solche eignen sich beispielsweise Triphenylmethan-4.4'.4"-triisocyanat, weiterhin Umsetzungsprodukte aus den weiter oben aufgeführten Diisocanaten, insbesondere Triisocyanurate dieser Diisocyanate, wie beispielsweise das Triisocyanurat, das aus Umsetzung von jeweils drei Molekülen Hexamethylendiisocyanat entsteht. Besonders bevorzugt ist das Triisocyanurat, das durch Umsetzung von jeweils drei Molekülen Isophorondiisocyanat gebildet wird.

Die Isocyanatgruppen der Komponente C. können blockiert vorliegen. Die Blockierung von Isocyanatgruppen ist bekannt (z. B. **Paint Resin** 58 (1988) 5, 18-19). Beispielsweise sei eine Blockierung durch Umsetzung der Isocyanatgruppen mit Diolen, Pyrazolen, Oximen, insbesondere Ketoximen, sowie Lactamen, insbesondere Caprolactam, angeführt.

Die Isocyanate können einzeln oder im Gemisch eingesetzt werden. Sie sind zu 0,02 bis 5 Gew.-%, vorzugsweise zu 0,5 bis 2 Gew.-%, - jeweils bezogen auf die Summe der Komponenten (A. + B.) - in der Formmasse enthalten.

Bei der Komponente D. handelt es sich um eine Verbindung der allgemeinen Formel (I) 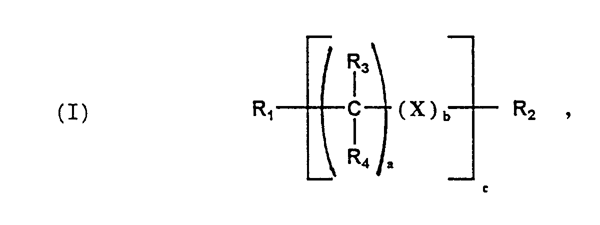 in der
R₁ und R₂: 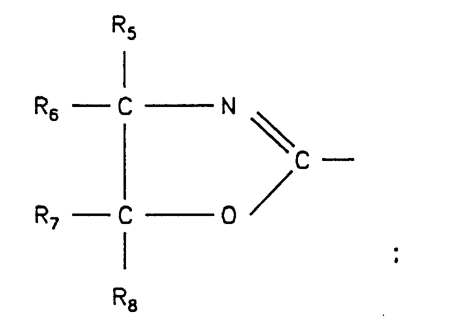 R₃ bis R₈: H, einen aliphatischen oder cycloaliphatischen C₁₋₁₂-Rest,
X: einen aromatischen C₆₋₁₂-Rest bzw. einen cycloaliphatischen C₃₋₁₂-Rest sowie a: 0 bis 12, b bzw. c: 0 oder 1 bedeuten. Die verschiedenen Substituenten R oder X bzw. a, b oder c können gleich oder verschieden sein.

Als Beispiel für die erfindungsgemäßen Bisoxazoline werden Methylen-bis(2-oxazolin), Ethylen-bis(2-oxazolin), Ethylen-bis(4-methyl-2-oxazolin), Propylen-bis(2-oxazolin), Tetramethylen-bis(2-oxazolin), Hexamethylen-bis(2-oxazolin), Octamethylen-bis(2-oxazolin), p-Phenylen-bis(2-oxazolin), p-Phenylen-bis(4-methyl-2-oxazolin), p-Phenylenbis(4.4-dimethyl-2-oxazolin), p-Phenylen-bis(4-phenyl-2-oxazolin), m-Phenylen-bis(2-oxazolin), m-Phenylen-bis(2-methyl-2-oxazolin), m-Phenylen-bis(4.4-dimethyl-2-oxazolin), m-Phenylen-bis(4-phenyl-2-oxazolin), o-Phenylen-bis(2-oxazolin), Phenylen-bis(4-methyl-2-oxazolin), Bis(2-oxazolin), Bis(4-methyl-2-oxazolin), Bis(4-ethyl-2-oxazolin), Bis(4-phenyl-2-oxazolin) genannt.

Bevorzugt verwendet werden m-Phenylen-bis(2-oxazolin) und p-Phenylen-bis(2-oxazolin).

Die Bisoxazoline können einzeln oder im Gemisch eingesetzt werden. Sie sind zu 0,02 bis 2 Gew.-%, vorzugsweise zu 0,5 bis 1 Gew.-%, - jeweils bezogen auf die Summe der Komponenten (A. + B.) - in der Formmasse enthalten.

Die Herstellung der erfindungsgemäßen Formmassen erfolgt in der Schmelze, besonders bevorzugt in einem kontinuierlichen Knetaggregat, wie z. B. einem Doppelwellenextruder, indem die Polyester- und die Polycarbonat-Komponente unter Zusatz der gewünschten Menge an Komponente C. und D. bei hohen Scherraten und bei Temperaturen zwischen 200 und 350 °C in der Schmelze innig vermischt werden.

Die untere Grenze der Arbeitstemperatur wird durch den Schmelzpunkt der höher schmelzenden Komponente gegeben, die obere Temperaturgrenze durch möglicherweise auftretende Zersetzungs- und Abbaureaktionen. In der Regel wird es sich als günstiger erweisen, die Massetemperatur der Schmelze nahe der oberen Temperaturgrenze zu halten. Zum Entfernen auftretender flüchtiger Produkte ist es vorteilhaft, die Schmelze durch Anlegen eines verminderten Druckes zu entgasen.

Die Reihenfolge der Dosierung der Komponenten A. bis D. ist grundsätzlich beliebig. Bevorzugt wird eine Verfahrensweise, bei der die Komponenten A. und B. mit den Komponenten C. und D. gleichzeitig in den ersten Einzug des Kneters gegeben und umgeschmolzen werden. Eine andere Möglichkeit besteht darin, die Komponenten A. und B. gleichzeitig in den ersten Einzug des Kneters zu dosieren und die Komponenten C. und D. stromabwärts in den zweiten Einlauf zu dosieren.

Der Formmasse können übliche Hilfs- und Zusatzstoffe, wie z. B. Flammschutzmittel, Stabilisatoren, Verarbeitungshilfsmittel, Viskositätsverbesserer, Füllstoffe, Pigmente o. ä. zugefügt werden.

Die erfindungsgemäßen Formmassen zeichnen sich durch eine deutlich verbesserte Hydrolysebeständigkeit im Vergleich zu Formmassen aus, die nicht die erfindungsgemäßen Additive enthalten. Ferner sind die Formmassen transparent und weisen darüber hinaus eine gleich gute Chemikalienbeständigkeit wie Formmassen auf Basis von Polyestern auf. Neben den guten Allgemeineigenschaften weisen aus den Formmassen hergestellte Formteile eine nur sehr geringe Schwindung auf.

Die in den Beispielen aufgeführten Ergebnisse werden mit Hilfe nachstehender Meßverfahren bestimmt.

Die **Bestimmung der Lösungsviskosität** (Viskositätszahl J) der Polyester, der Polycarbonate und der Formmassen erfolgt in einer 0,5 gew.-%igen Phenol/o-Dichlorbenzol-Lösung (Gewichtsverhältnis 1 : 1) bei 25 °C gemäß DIN 53 728/ISO 1628 - Teil 3.

Zur Bestimmung der Hydrolysebeständigkeit werden die Proben (Spritzlinge, z. B. Zugstäbe) im Feuchtklima gemäß den Bellcore-Bedingungen bei 94 % relativer Feuchte und 85 °C gelagert. Nach den entsprechenden Alterungszeiten (z. B. 7, 14, 21, ... Tage) wird die Lösungsviskosität gemäß DIN 53728-T3 an den Probekörpern ermittelt. Ein schneller Abfall der Lösungsviskosität deutet auf eine geringe Hydrolysestabilität hin.

Die mit Buchstaben gekennzeichneten Beispiele sind nicht erfindungsgemäß.

### Beispiele

Die nachstehend genannten Formmassen werden auf einem Doppelschneckenkneter der Fa. Werner & Pfleiderer, Typ ZSK 30, hergestellt. Die Verarbeitungstemperatur beträgt ca. 260 °C; der Durchsatz liegt bei ca. 15 kg/h. Hierbei werden sämtliche Komponenten zusammen trocken vorgemischt; das Dryblend wird sodann in den ersten Einzug dosiert.

### Versuch A

### Zusammensetzung der Formmasse:

A. 75 Gew.-Teile Homopolybutylenterephthalat (J-Wert: 165; VESTODUR® 3000 - Hüls AG)
B. 25 Gew.-Teile Polycarbonat (Basis: Bisphenol A; J-Wert: 80; MAKROLON® 3200 - Bayer AG)
0,2 Gew.-% - bezogen auf die Summe (A. + B.) - Stabilisator IRGANOX® 1010 (Ciba Geigy).

Undurchsichtige Schmelze; opake Formteile.

### Versuch B

### Zusammensetzung der Formmasse:

A. 75 Gew.-Teile Homopolybutylenterephthalat (J-Wert: 165; VESTODUR® 3000 - Hüls AG)
B. 25 Gew.-Teile Polycarbonat (Basis: Bisphenol A; J-Wert: 80; MAKROLON® 3200 - Bayer AG)
0,2 Gew.-% - bezogen auf die Summe (A. + B.) - Stabilisator IRGANOX® 1010.
1 Gew.-% - bezogen auf die Summe (A. + B.) - m-Phenylen-bis(2-oxazolin)

Undurchsichtige Schmelze; opake Formteile.

### Versuch 1

### Zusammensetzung der Formmasse:

A. 75 Gew.-Teile Homopolybutylenterephthalat (J-Wert: 165; VESTODUR® 3000 - Hüls AG)
B. 25 Gew.-Teile Polycarbonat (Basis: Bisphenol A; J-Wert: 80; MAKROLON® 3200 - Bayer AG)
0,2 Gew.-% - bezogen auf die Summe (A. + B.) - Stabilisator IRGANOX® 1010
1 Gew.-% - bezogen auf die Summe (A. + B.) - m-Phenylen-bis(2-oxazolin)
1 Gew.-% Uretdion-Butandiol - Addukt auf Basis von Isophorondiisocyanat.; (VESTAGON® BF 1540 - Hüls AG)

Transparente Schmelze; transparente Formteile.

**Tabelle 1:**

| Hydrolysebeständigkeit | | | |
|---|---|---|---|
| Zeit [Tage] | Versuch A J-Wert [cm³/g] | Versuch B J-Wert [cm³/g] | Versuch 1 J-Wert [cm³/g] |
| 0 | 120 | 140 | 140 |
| 7 | 101 | 132 | 141 |
| 14 | 95 | 122 | 134 |
| 21 | 89 | 116 | 130 |
| 28 | 81 | 106 | 122 |
| 35 | 76 | 99 | 116 |
| 42 | 66 | 93 | 110 |
| 56 | 59 | 80 | 100 |
| 63 | - | 74 | 95 |
| 70 | - | 69 | 89 |
| 77 | - | 65 | 86 |

## Patentansprüche

1. Formmasse enthaltend
A. 41 bis 99 Gew.-% eines linearen thermoplastischen Polyesters,
B. 1 bis 59 Gew.-% eines Polycarbonats,
**dadurch gekennzeichnet,**
**daß** die Formmasse zusätzlich
C. 0,02 bis 5 Gew.-% - bezogen auf die Summe der Komponenten (A. + B.) - eines Isocyanats, wobei ggf. die Isocyanatgruppen blockiert vorliegen können,
und
D. 0,02 bis 2 Gew.-% - bezogen auf die Summe der Komponenten (A. + B.) - einer Verbindung der allgemeinen Formel 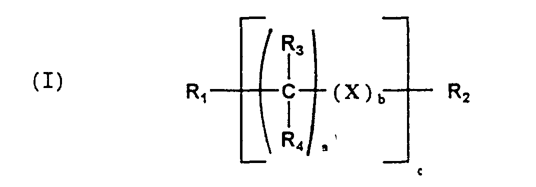 enthält, in der
R₁ und R₂: 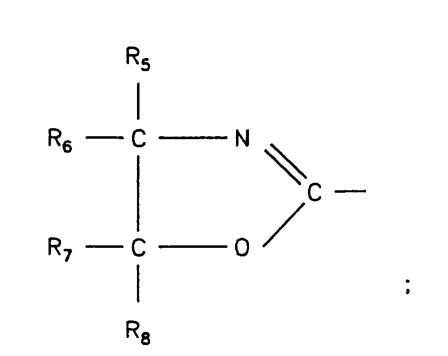
R₃ bis R₈: H; aliphatischer oder cycloaliphatischer C₁₋₁₂-Rest, wobei R₃ bis R₈ gleich oder verschieden sein können;
X: aromatischer C₆₋₁₂-Rest, cycloaliphatischer C₃₋₁₂-Rest
a: 0 bis 12;
b: 0; 1
c: 0; 1
bedeuten.

2. Formmasse nach Anspruch 1,
**dadurch gekennzeichnet,**
**daß** die Formmasse 0,5 bis 2 Gew.-% - bezogen auf die Summe der Komponenten (A. + B.) - eines Isocyanats enthält.

3. Formmasse nach einem der Ansprüche 1 oder 2,
**dadurch gekennzeichnet,**
**daß** die Komponente C. eine Verbindung mit mindestens zwei Isocyanatgruppen darstellt.

4. Formmasse nach einem der vorhergehenden Ansprüche,
**dadurch gekennzeichnet,**
**daß** die Komponente C. Isophorondiisocyanat oder eine daraus durch Umsetzung mit sich selbst oder mit Diolen abgeleitete Verbindung darstellt.

5. Formmasse nach einem der Ansprüche 1 bis 3,
**dadurch gekennzeichnet,**
**daß** die Komponente C. ein aus Isophorondiisocyanat abgeleitetes Isocyanurat darstellt.

6. Formmasse nach einem der vorhergehenden Ansprüche,
**dadurch gekennzeichnet,**
**daß** die in der Komponente C. enthaltene Verbindung durch Lactam blockierte Isocyanatgruppen aufweist.

7. Formmasse nach einem der vorhergehenden Ansprüche,
**dadurch gekennzeichnet,**
**daß** die Formmasse 0,5 bis 1 Gew.-% - bezogen auf die Summe der Komponenten (A. + B.) - einer Verbindung der allgemeinen Formel (I) enthält.

8. Formmasse gemäß einem der vorhergehenden Ansprüche,
**dadurch gekennzeichnet,**
**daß** als Komponente D m-Phenylen-bis(2-oxazolin) oder p-Phenylen-bis(2-oxazolin) verwendet wird.

## Claims

1. A moulding composition comprising
A. from 41 to 99% by weight of a linear thermoplastic polyester,
B. from 1 to 59% by weight of a polycarbonate,
**characterized in that**
the moulding composition also comprises
C. from 0.02 to 5% by weight - based on the entirety of the components (A. + B.) - of an isocyanate, where, if desired, the isocyanate groups may be present in blocked form,
and
D. from 0.02 to 2% by weight - based on the entirety of the components (A. + B.) - of a compound of the general formula 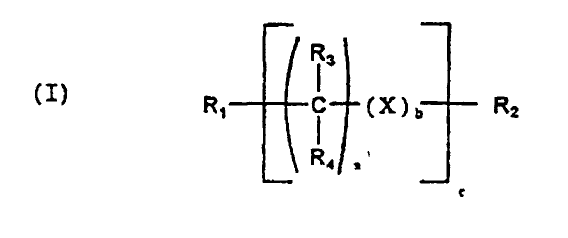
where
R₁ and R₂ are 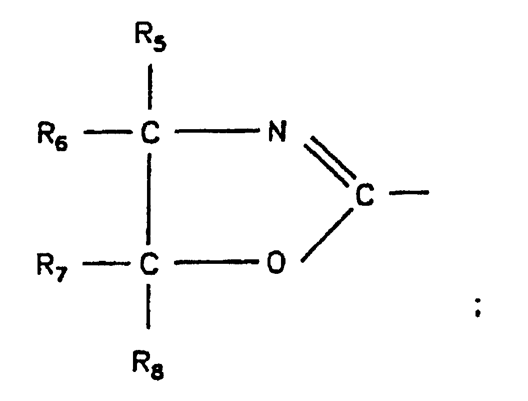
R₃ to R₈ are H; an aliphatic or cycloaliphatic C₁-C₁₂ radical,
where R₃ to R₈ may be identical or different;
X is an aromatic C₆₋₁₂ radical, or a cycloaliphatic C₃-C₁₂ radical;
a is from 0 to 12;
b is 0; 1
c is 0; 1.

2. A moulding composition according to claim 1,
**characterized in that**
the moulding composition comprises from 0.5 to 2% by weight - based on the entirety of components (A. + B.) - of an isocyanate.

3. A moulding composition according to claim 1 or 2,
**characterized in that**
component C. is a compound having at least two isocyanate groups.

4. A moulding composition according to any one of the preceding claims,
**characterized in that**
component C. is isophorone diisocyanate or a compound derived therefrom by reaction with itself or with diols.

5. A moulding composition according to any one of claims 1 to 3,
**characterized in that**
component C. is an isocyanurate derived from isophorone diisocyanate.

6. A moulding composition according to any one of the preceding claims,
**characterized in that**
the compound present in component C. has lactam-blocked isocyanate groups.

7. A moulding composition according to any one of the preceding claims,
**characterized in that**
the moulding composition comprises from 0.5 to 1% by weight - based on the entirety of components (A. + B.) - of a compound of the general formula (I).

8. A moulding composition according to any one of the preceding claims,
**characterized in that**
m-phenylenebis(2-oxazoline) or p-phenylenebis(2-oxazoline) is used as component D.

## Revendications

1. Matériau moulable renfermant
A) de 41 à 99 % en poids d'un polyester linéaire thermoplastique,
B) de 1 à 59 % en poids d'un polycarbonate,
**caractérisé en ce que**
le matériau moulable contient en supplément,
C) de 0,02 à 5 % en poids rapporté à la somme des composants (A + B) d'un isocyanate dans lequel éventuellement les groupes isocyanate peuvent se présenter à l'état bloqué, et
D) de 0,02 à 2 % en poids rapporté à la somme des composants (A + B) d'un composé de formule générale (I), 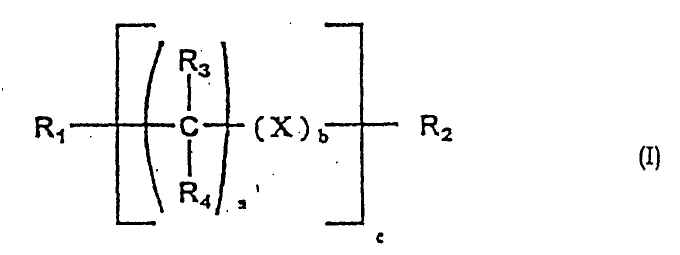
dans laquelle
R₁ et R₂ signifient 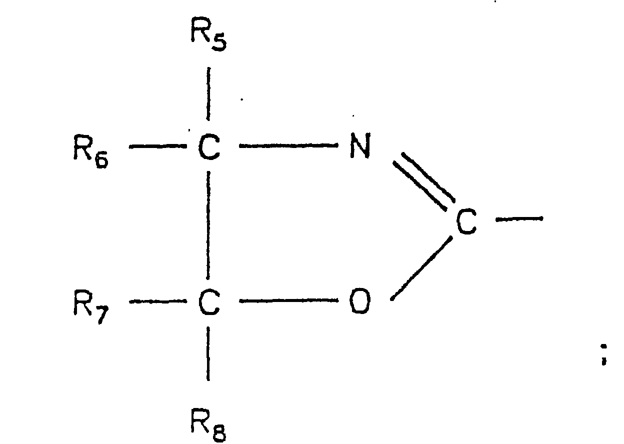
R₃ à R₈ signifient : H, un reste aliphatique ou cycloaliphatique en C₁₋₁₂, R₃ à R₈ pouvant être identiques ou différents,
X: signifie un reste aromatique en C₆₋₁₂, un reste cycloaliphatique en C₃₋₁₂,
a: 0 à 12;
b: 0; 1
c: 0; 1

2. Matériau moulable selon la revendication 1,
**caractérisé en ce que**
la matière moulable renferme de 0,5 à 2 % en poids, rapporté à la somme des composants (A + B) d'un isocyanate.

3. Matériau moulable selon l'une quelconque des revendications 1 ou 2,
**caractérisé en ce que**
le composant C représente un composé ayant au moins deux groupes isocyanate.

4. Matériau moulable selon l'une quelconque des revendications précédentes,
**caractérisé en ce que**
le composant C représente de l'isophoronediisocyanate ou un composé qui en dérive par réaction avec lui-même ou avec des diols.

5. Matériau moulable selon l'une quelconque des revendications 1 à 3,
**caractérisé en ce que**
le composant C représente un isocyanate dérivé de l'isophoronediisocyanate.

6. Matériau moulable selon l'une quelconque des revendications précédentes,
**caractérisé en ce que**
le composé contenu dans le composant C possède des groupes isocyanate bloqués par un lactame.

7. Matériau moulable selon l'une quelconque des revendications précédentes,
**caractérisé en ce que**
la matière moulable contient de 0,5 à 1 % en poids rapporté à la somme des composants (A + B) d'un composé de formule générale (I).

8. Matériau moulable selon l'une quelconque des revendications précédentes,
**caractérisé en ce qu'**
on utilise comme composant D) de la m-phénylène-bis(2-oxazoline) ou de la p-phénylène-bis(2-oxazoline).
